# EUROPEAN PATENT SPECIFICATION

(11) **EP 0 421 602 B1**
(45) Date of publication and mention of the grant of the patent: **22.02.1995**
(21) Application number: 90309559.4
(22) Date of filing: 31.08.1990
(51) Int. Cl.: H04Q 11/02, H04B 10/12, H04Q 7/00

(54) **Hybrid network**
Hybrides Netzwerk
Réseau hybride

(30) Priority: 04.10.1989 GB 8922309
(43) Date of publication of application: 10.04.1991
(73) Proprietor: NORTHERN TELECOM LIMITED, Montreal, Quebec H2Y 3Y4 (CA)
(72) Inventor: Powell, William Hugh, Sawbridgeworth, Herts CM21 9NB (GB)
(74) Representative: Laurence, Simon French

(56) References cited:
- GB-A- 2 214 755
- US-A- 4 916 460
- NTZ NACHRICHTENTECHNISCHE ZEITSCHRIFT. vol. 37, no. 12, December 1984, BERLIN DE pages 778 - 784; H.OHNSORGE: 'Bigfon und seine Nutzungsmöglichkeiten'
- TELCOM REPORT. vol. 6, April 1983, MUNCHEN DE pages 149 - 156; H.BAUCH ET AL.:'Nachrichtenübertragung im Teilnehmerbereich optischer Breitbandnetze'
- 14TH INTERNATIONAL TV SYMPOSIUM 6 December 1985, MONTREUX CH pages 293 - 308; M. TRIBOULET: 'Subscriber Terminal Equipment and Domestic Communication Network in Future Videocommunications Network'

## Description

This invention relates to an hybrid network and in particular to a multi-service hybrid ether access network.

Hybrid networks which include optical fibre and coaxial cable for the provision of a range of services is for instances known from the article by H Ohnsorge entitled, 'Bigfon und seine Nutzungsmöglichkeiten', Nachrichtentechnische Zeitschrift Vol. 37, No. 12, December 1984, pages 778 to 784. In that article there is for instance described a network in which the optical fibre provides a transmission medium between a head end and an exchange and intermediate distribution point, and in which the coaxial cable provides a transmission medium between the intermediate distribution point and the interior of a subscriber's premises.

The present invention is similarly concerned with hybrid networks, and is particularly directed to such networks incorporating a cordless telephony services within subscribers' premises in a simple and hence cost-effective manner. This is achieved by arranging for the different services to be carried throughout the network in unified signal format.

According to the present invention there is provided an hybrid network including optical fibre, coaxial cable and radio transmission means, and providing a range of services which are separated by appropriate frequency allocation, characterised in that the individual services of the range, which includes cordless radio telephony, have a unified signal format in the fibre, coaxial and radio sections of the network so that, though the frequency allocation for any individual service is not necessarily the same throughout the network, the signal format of that individual service does remain the same throughout the network, the cordless telephony signals being carried in unmodified radio format over both the optical fibre and the coaxial cable.

Embodiments of the invention will now be described with reference to the accompanying drawings, in which:

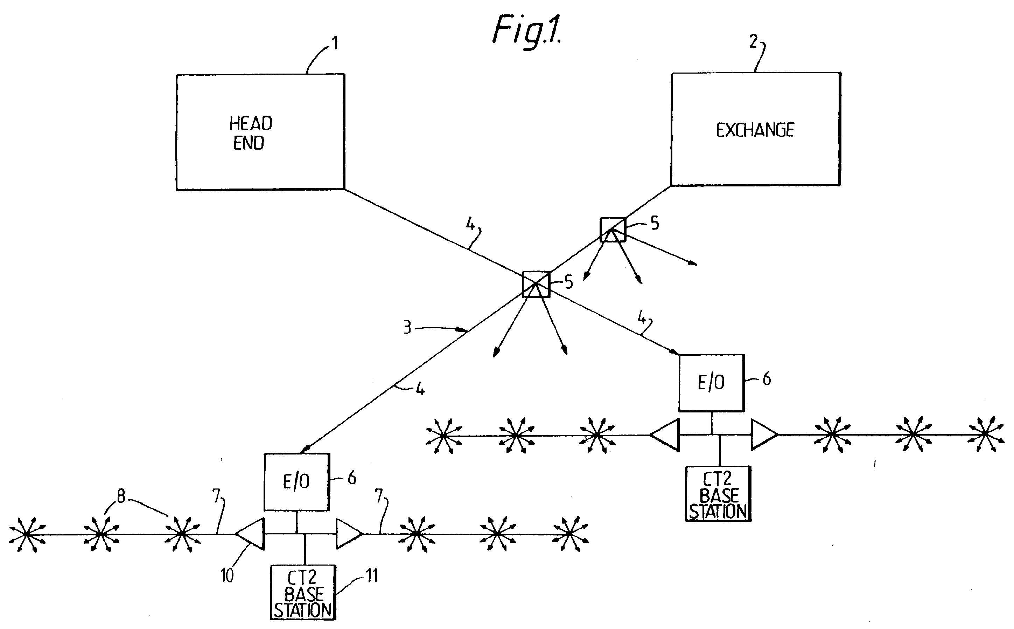

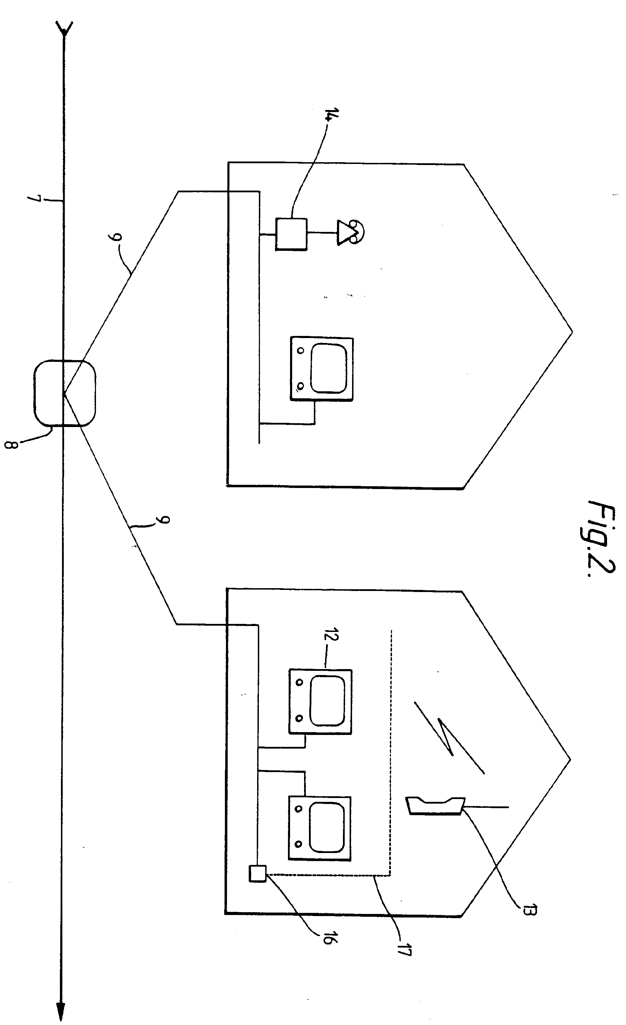

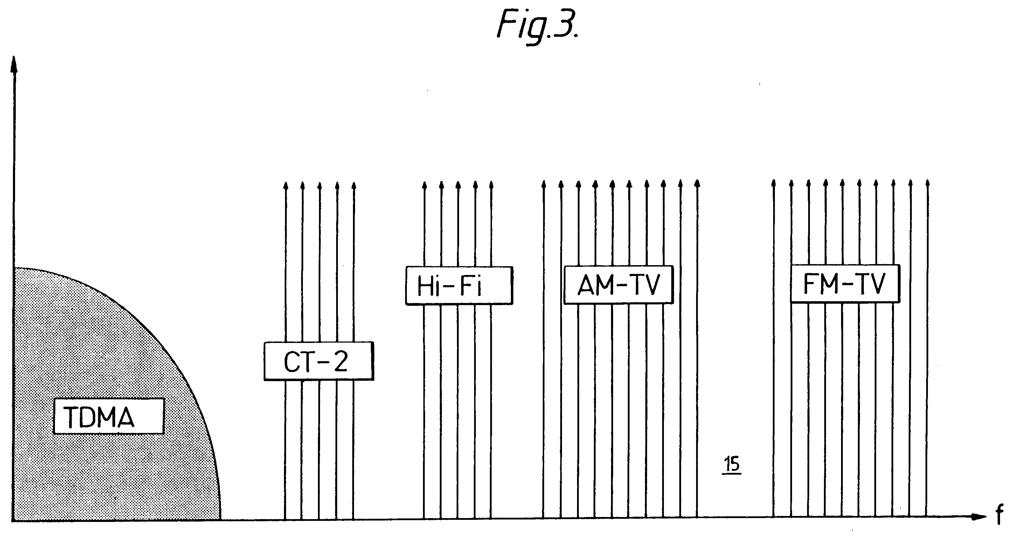

Fig. 1 illustrates, schematically, an embodiment of hybrid ether access network, Fig. 2 illustrates typical business/residential subscriber facilities, Fig. 3 illustrates a typical allocation of services.

There is currently interest in combined cable TV (CaTV) and telephony. CaTV conventionally involves coaxial cable running down a street with taps thereon for the subscribers. A large number of amplifiers in the line are required and this leads to performance degradation. To overcome this the CaTV operators are replacing some of the coaxial cable, that extending to the head end and including large numbers of amplifiers, with optical fibre, and thus only short chains of amplifiers, some 6 or 7, are now envisaged. Telephony currently involves twisted pair cable at the subscriber end and this cannot adequately handle wideband transmission, whereas the coaxial cable of CaTV can readily handle both wideband and telephony. Thus if a telephony operator is also to supply wideband transmission to a subscriber the twisted pair cable must be replaced. The optical fibre cables used or being installed elsewhere in telephony systems can, however, handle the wideband transmissions.

Costing estimates of adding telephone to CaTV or adding CaTV to telephony indicate that the former approach is the cheaper, basically since the telephony operator cannot make use of his existing twisted pairs and has to replace them with optical fibre or coaxial cable. Surprisingly we have found that even starting without an existing system it is cheaper to use a CaTV approach with fibre optics towards the head end, rather than a telephony approach, when designing a combined system.

An embodiment of combined system is shown in Fig 1. A CaTV head end 1 and a PTT exchange 2 are connected to a passive optical network 3 consisting of optical fibre 4 and optical couplers 5 which combine the CaTV and telephony facilities and distribute the services of both operators to so-called intermediate flexibility points (IFP) 6. At these intermediate flexibility points the optical signals are converted to electrical signals and carried to subscribers' premises over "street" coaxial cable 7, via distribution points DP 8, and over short lengths of coaxial cable 9, see also Fig. 3. At the IFP 6 there will be connections to an electricity source, plus standby batteries, as well as the necessary electro-optic conversion means, and there may be other equipment such as system management computer means. Amplifiers 10 are provided for launching the signal down the street cables 7. In the illustrated embodiment there is also shown a cordless telephone (CT2) public base station 11, such as a Telepoint, whereby CT2 handset owners can make outgoing calls when in range thereof as is conventional.

Typical residential/business subscriber facilities are illustrated in Fig. 2. The range of services that may be provided are shown in Fig. 3. These services may consist of:
(a) Broadcast CaTV services in AM-VSB format to a TV set 12 at its VHF or UHF antenna socket.
(b) Premium TV services requiring a means of descrambling or privileged by-pass of blocking filters at the distribution point DP.
(c) Hi-Fi sound services to a VHF tuner or carried digitally to a digital decoder as part of a TDMA (time domain multiple access) multiplex.
(d) Distribution of Satellite TV services in FM-TV format as carried on the satellite.
(e) Cordless telephony 13 carried for instance in CT2 radio format.
(f) Conventional telephony via an interface 14 between CT2 FDMA or TDMA signals on the cable to a standard telephony socket.
(g) High speed or wideband data services via a TDMA format signal carried on the cable.

A subscriber might have access to all of these services. Alternatively, access can be blocked to services that he does not subscribe to by blocking filters incorporated at the distribution point 8, in view of the different frequencies associated with the various services (Fig. 3).

The system is low in cost to implement because the services will for the most part be in the format which the subscribers' equipment is already designed to accept, be it VSB for TV, FM-TV for satellite stations or CT2 for cordless telephony, for example. It is estimated that a low loss coaxial cable 7 will be able to serve 6 to 10 DPs 8 connecting via shorter low loss coaxial subscriber cables 9 to a total of 60 to 100 subscribers from a single IFP without the use of coaxial cable repeater amplifiers.

It should be noted that in Fig. 3, the CT2 frequency band is illustrated at a lower frequency than that it generally occupies. Normally it is at 900 MHz and would be between the AM-TV and FM-TV bands ie at 15 There are advantages in using the lower frequency band shown since losses in the coaxial cable would be lower.

It may be more convenient to convert the format of some signals, such as CT2, to one more suitable for exchange or trunk transmission, at the IFP. The cost of doing so would, however, be shared over the segment of subscribers served by that IFP. The costs of the passive optical network 3 are also shared, this time over a number of IFP network segments.
The CaTV head end and PTT exchange can be operationally separate, whilst supported by the single hybrid network, in the following ways:-
(a) Frequency separation and the incorporation of blocking filters. This allows separated signal formats and control protocols to be used as may be most economic or reliable.
(b) Physical separation of the head end and exchange whereby a failure of either one need not affect the other.

The cordless telephony service "in-house" (as shown at 13) might be carried via an interface 16 that amplifies and changes frequency between the domestic antenna 17 and the coaxial cable 9. This will depend on the frequency allocations in the radio and cable media and the permissible power levels. The interface equipment (14 and 16) can be powered from the coaxial cable to make it more reliable than depending on power supply at the subscriber since otherwise a power failure at the subscriber could also render the telephone inoperative. Lower power levels than usual for a Telepoint would, however, be involved. The illustrated access into the subscriber's premises on cable before a cordless radio interface can overcome difficulties often encountered in modern buildings that contain steel reinforcing or even tinted glass which are impervious to radio waves. In some premises a leaky feeder may give a more uniform cordless coverage than an antenna.
Some aspects of services could also be integrated. For instance, the keypad on the CT2 handset could also be used for selecting TV programmes to be sent to the subscriber from the head end. This would involve sharing the signalling protocol for the telephony and TV systems. Whilst such sharing is not necessary, it might be seen as desirable in order to minimise the customer equipment and present him with a single interface.

As will be appreciated from Fig. 3 and the above it is envisaged that both CT2 and TDMA formats could be transmitted simultaneously over the network and that a wall socket that had a TDMA structure could be provided with the result that a business could make use of TDMA and/or cordless, whilst house residents might prefer to take cordless only. TDMA is likely to provide considerably more channels e.g. 240 (for a small TDMA system) than CT2 i.e. 40, and is particularly appropriate for data transmission such as downloading graphics.

Since CT2 involves a number of channels and a user is allocated a channel when necessary rather than always being associated with a particular one, then if a second CT2 handset is purchased for the house it will be able to pick up another channel and thus achieve two lines not just two handsets. It should be noted that within a residence/business the CT2 cordless telephony will involve two-way working, not the outgoing calls only arrangement associated with Telepoint.

Furthermore it will be appreciated that CT2 telephony involves digital techniques and this is advantageous at the exchange end, and that CT2 switching organisation is compatible with the exchange. TDMA actually provides three times the capacity in the downstream broadcast direction to the subscriber as there is back to the exchange since guard bands must be left between return messages, whilst they are not needed for downstream messages. Thus for 500 telephony channel TDMA, in the downstream direction there are some 1000 spare channels which could be used for broadcasting hi-fi, or data base information such as CEEFAX etc.

The hybrid optical fibre/coaxial network described above provides telephony, data, entertainment video and sound, together with a cordless telephone service. The services are integrated onto a common network whilst retaining separation through frequency division and there is a unified signal format in the fibre, coaxial and radio sections of the system. The synergy of the optical/coaxial/radio transmission path minimises costs and enhances service. However, the operation of the CaTV and telephony services can be separate for reasons of operational reliability and administrative convenience. Since the fibre does not extend directly to the subscribers (homes) there are not the problems of providing power involved with fibre to home proposals. It is not necessary to provide all of the services initially. Services can be added incrementally without disturbing prior services. By taking the cable into a building and very close to the point of delivery, lower powers can be used for cordless telephone and the problems of steel in buildings and tinted glass can be overcome, and furthermore EMC (electromagnetic compatibility) difficulties can be overcome.

## Claims

1. An hybrid network including optical fibre, (4) coaxial cable (7, 9) and radio transmission means, and providing a range of services which are separated by appropriate frequency allocation, characterised in that the individual services of the range, which includes cordless radio telephony, have a unified signal format in the fibre, coaxial and radio sections of the network so that, though the frequency allocation for any individual service is not necessarily the same throughout the network, the signal format of that individual service does remain the same throughout the network, the cordless telephony signals being carried in unmodified radio format over both the optical fibre and the coaxial cable.

2. An hybrid network as claimed in claim 1, wherein the optical fibre (4) provides a transmission medium between a head end (1), an exchange (2), and intermediate distribution point (6), and wherein the coaxial cable (7, 9) provides a transmission medium between the intermediate distribution points and the interiors of subscribers' premises.

3. An hybrid network as claimed in claim 2, wherein within said premises the cordless telephony signals are converted for application to a standard telephony socket.

4. An hybrid network as claimed in either of claims 2 and 3, and including a cordless telephony base station (11) associated with a said intermediate distribution point (6) for use by cordless telephony sets outside of said premises and within range thereof for outgoing calls.

5. An hybrid network as claimed in any one of claims 2, 3 and 4, wherein the head end (1) includes a cable television head end, and the head end (1) and the exchange (2) are operationally separate and/or physically separate.

6. An hybrid network as claimed in claim 5, wherein the services provided by the cable television head end include one or more of the following, namely broadcast TV services, premium TV services, distribution of satellite TV services, hi-fi sound services.

7. An hybrid network as claimed in any one of the claims 2 to 6, wherein time division multiple access (TDMA) is employed to provide telephony, hi-fi or data services.

8. An hybrid network as claimed in any one of claims 2 to 7, wherein each intermediate distribution point (6) is associated with a plurality of subscribers, said plurality of subscribers being subdivided into a number of groups of subscribers and wherein the groups of subscribers are connected to the coaxial cable (7) coupled to the intermediate distribution point at respective subscriber group distribution points (8), each subscriber being connected via a respective coaxial cable (9) to its associated group distribution point (8).

9. An hybrid network as claimed in claim 8, wherein access of particular subscribers to particular services is blocked by blocking filters provided at the group distribution point (8).

10. An hybrid network as claimed in any one of the preceding claims, and employing low loss coaxial cable without coaxial cable repeater amplifiers.

## Patentansprüche

1. Hybrid-Netz mit einer Lichtleitfaser (4), einem Koaxialkabel (7, 9) und Funkübertragungseinrichtungen, das einen Bereich von Diensten zur Verfügung stellt, die durch eine geeignete Frequenzzuweisung voneinander getrennt sind, dadurch gekennzeichnet, daß die einzelnen Dienste des Bereiches, die ein schnurloses Funkfernsprechen einschließen, ein einheitliches Signalformat in den Lichtleitfaser-, Koaxial- und Funkabschnitten des Netzes aufweisen, so daß, obwohl die Frequenzzuweisung für irgendeinen einzelnen Dienst nicht notwendigerweise in dem gesamten Netz der gleiche ist, das Signaformat dieses einzelnen Dienstes im gesamten Netzwerk gleich bleibt, wobei die schnurlosen Fernsprechsignale im unmodifizierten Funkformat sowohl über die Lichtleitfaser als auch das Koaxialkabel übertragen werden.

2. Hybrid-Netz nach Anspruch 1, bei dem die Lichtleitfaser (4) ein Übertragungsmedium zwischen einer Kopfstelle (1), einer Vermittlung (2) und einem Zwischenverteilerpunkt (6) ergibt, und bei dem das Koaxialkabel (7, 9) ein Übertragungsmedium zwischen den Zwischenverteilerpunkten und dem Innenraum der Wohnungen der Teilnehmer ergibt.

3. Hybrid-Netz nach Anspruch 2, bei dem in der Wohnung der Teilnehmer die schnurlosen Fernsprechsignale zur Zuführung an eine übliche Telefonbuchse umgewandelt werden.

4. Hybrid-Netz nach einem der Ansprüche 2 und 3, das eine schnurlose Telefon-Basisstation (11) einschließt, die einem Zwischenverteilerpunkt (6) für die Verwendung durch schnurlose Telefongeräte außerhalb der Wohnungen und innerhalb dessen Bereiches für abgehende Gespräche zugeordnet ist.

5. Hybrid-Netz nach einem der Ansprüche 2, 3 und 4, bei dem die Kopfstelle (1) eine Kabelfernseh-Kopfstelle einschließt, und bei dem die Kopfstelle (1) und die Vermittlung (2) betriebsmäßig getrennt und/oder körperlich getrennt sind.

6. Hybrid-Netz nach Anspruch 5, bei dem die Dienste, die von der Kabelfernseh-Kopfstelle geliefert werden, einen oder mehrere der folgenden Dienste einschließen, nämlich Rundfunk-Fernsehdienste, bevorrechtigte Fernsehdienste, Satellitenfernseh-Verteilerdienste und Hi-Fi-Tonfrequenzdienste.

7. Hybrid-Netz nach einem der Ansprüche 2 bis 6, bei dem ein Zeitvielfachzugriff (TDMA) zur Lieferung von Fernsprech-, HiFi- oder Datendiensten verwendet wird.

8. Hybrid-Netz nach einem der Ansprüche 2 bis 7, bei dem jeder Zwischenverteilerpunkt (6) einer Vielzahl von Teilnehmern zugeordnet ist, wobei die Vielzahl von Teilnehmern in eine Anzahl von Gruppen von Teilnehmern unterteilt ist, und bei dem die Gruppen von Teilnehmern mit dem mit dem Zwischenverteilerpunkt gekoppelten Koaxialkabel (7) an jeweiligen Teilnehmergruppen-Verteilerpunkten (8) verbunden sind, wobei jeder Teilnehmer über ein jeweiliges Koaxialkabel (9) mit seinem zugehörigen Gruppenverteilerpunkt (8) verbunden ist.

9. Hybrid-Netz nach Anspruch 8, bei dem der Zugriff bestimmter Teilnehmer auf bestimmte Dieste durch Sperrfilter gesperrt ist, die an dem Gruppenverteilerpunkt (8) vorgesehen sind.

10. Hybrid-Netz nach einem der vorhergehenden Ansprüche, das ein niedrige Verluste aufweisendes Koaxialkabel ohne Koaxialkabel-Zwischenverstärker verwendet.

## Revendications

1. Réseau hybride comprenant une fibre optique (4), un câble coaxial (7, 9) et un dispositif de transmission radioélectrique, donnant toute une gamme de services qui sont séparés par affectation appropriée des fréquences, caractérisé en ce que les services individuels de la gamme, comprenant la téléphonie radioélectrique sans fil, possèdent un format unifié de signaux dans les sections à fibre, coaxiales et radioélectriques du réseau si bien que, bien que l'affectation de fréquence à un service individuel quelconque ne soit pas obligatoirement la même dans tout le réseau, le format des signaux de ce service individuel reste le même dans tout le réseau, les signaux de téléphonie sans fil étant transportés en format radioélectrique non modifié à la fois dans la fibre optique et le câble coaxial.

2. Réseau hybride selon la revendication 1, dans lequel la fibre optique (4) forme un support de transmission entre une tête (1) de réseau, un central (2) et un point intermédiaire de distribution (6), et dans lequel le câble coaxial (7, 9) forme un support de transmission entre les points intermédiaires de distribution et l'intérieur des locaux des abonnés.

3. Réseau hybride selon la revendication 2, dans lequel, à l'intérieur des locaux, les signaux de téléphonie sans fil sont transformés afin qu'ils soient appliqués à une douille téléphonique classique.

4. Réseau hybride selon la revendication 2 ou 3, comprenant une station (11) de base de téléphonie sans fil associée au point intermédiaire de distribution (6) et destinée à être utilisée par des combinés téléphoniques sans fil à l'extérieur des locaux et dans une plage d'accès aux appels sortants.

5. Réseau hybride selon l'une des revendications 2, 3 et 4, dans lequel la tête (1) de réseau comprend une tête de réseau de télévision par câble, et la tête (1) de réseau et le central (2) sont séparés opérationnellement et/ou physiquement.

6. Réseau hybride selon la revendication 5, dans lequel les services donnés par la tête de réseau de télévision par câble comportent un ou plusieurs services parmi les suivants : les services de télévision par diffusion aérienne, les services payants de télévision, la distribution des services de télévision par satellite et les services de son de haute fidélité.

7. Réseau hybride selon l'une quelconque des revendications 2 à 6, dans lequel l'accès multiple par division temporelle (TDMA) est utilisé pour les services de téléphonie, de son de haute fidélité ou de données.

8. Réseau hybride selon l'une quelconque des revendications 2 à 7, dans lequel chaque point intermédiaire de distribution (6) est associé à plusieurs abonnés, les abonnés étant subdivisés en un certain nombre de groupes d'abonnés, et les groupes d'abonnés sont connectés au câble coaxial (7) couplé au point intermédiaire de distribution à des points respectifs (8) de distribution de groupes d'abonnés, chaque abonné étant connecté par un câble coaxial respectif (9) à son point associé de distribution de groupe (8).

9. Réseau hybride selon la revendication 8, dans lequel l'accès d'un abonné particulier à des services particuliers est interrompu par des filtres d'arrêt placés au point de distribution de groupe (8).

10. Réseau hybride selon l'une quelconque des revendications précédentes, mettant en oeuvre un câble coaxial à faibles pertes sans amplificateur répéteur de câble coaxial.
